# EUROPEAN PATENT APPLICATION

(11) **EP 4 119 519 A1**
(43) Date of publication of application: **18.01.2023**
(21) Application number: 21184949.2
(22) Date of filing: 12.07.2021
(51) Int. Cl.: C04B 28/02, C04B 28/04, C04B 28/06, C04B 28/08, C04B 40/00, C04B 103/10

(54) **STRENGTH ENHANCING ADMIXTURE FOR LOW-CARBON CEMENTITIOUS COMPOSITIONS**

(71) Applicant: Mapei S.p.A., 20158 Milano (IT)
(72) Inventor: FERRARI, Giorgio, 20158 Milano (IT); CASTIGLIONI, Fabio, 20158 Milano (IT); CORBO, Piero, 20158 Milano (IT); SQUINZI, Marco, 20158 Milano (IT)
(74) Representative: Bianchetti & Minoja SRL

(57) **Abstract**

The invention discloses a concrete admixture based on transition metal silicate hydrates for improving the strength development at both early and longer ages of low-carbon cementitious compositions based on Portland cement and supplementary cementitious materials SCMs, including fly ash, slag, natural pozzolanas, silica fume and calcined clays.

## Description

### BRIEF DESCRIPTION OF THE INVENTION

The present invention relates to a new concrete admixture based on transition metal silicate hydrates for improving the strength development at both early and longer ages of low-carbon cementitious compositions based on Portland cement and supplementary cementitious materials SCMs, including fly ash, slag, natural pozzolanas, silica fume and calcined clays.

### BACKGROUND OF THE INVENTION

Concrete, with an annual production of more than 10 billion cubic meters, is the second most used material on earth, after water. Its success arises from its versatility, resilience, ease of production, low cost, durability. The essential ingredient of concrete is Portland cement, the "glue" which, after mixing with water and setting, binds together the other ingredients, represented by sand and coarse aggregates.

Besides these advantages, the production of concrete poses alarming environmental concerns for the massive CO₂ emissions associated with its production, large part of which is ascribed to the key input Portland cement. In fact, the chemical and thermal combustion process involved in the production of cement are a large source of CO₂, accounting for around 8 per cent of global CO₂ emissions (Lehne, J. and Preston, F., "Making Concrete Change - Innovation in Low-carbon Cement and Concrete", Chatham House report, the Royal Institute of International Affairs, 2018).

The replacement of Portland cement by Supplementary Cementitious Materials (SCMs) such as fly ash, Ground Granulated Blast-Furnace Slag (GGBFS), pozzolanas, limestone and calcined clays represents a powerful lever for reducing the use of cement and correspondingly the CO₂ emissions. In some cases, particularly with GGBFS, the replacement in Portland cements can be up to 80 per cent, as for example in cement CEM III/B according to European Norm EN 197-1, which contains from 66 to 80 per cent of GGBFS as clinker substitute.

One of the most important limitations to high substitution levels of clinker by SCMs in Portland cement is the loss of strength of the resulting concrete, compared with similar concrete made with only Portland cement. Indeed, SCMs react slower than clinker and therefore develop mechanical strength after longer time. Furthermore, also the final strength at longer age is lower when the amount of SCMs exceed certain dosage. For these reasons, the actual global average level of substitution of SCMs in commercial cements, expressed as the clinker-to-cement ratio, remains stationary around 0.71, still far from the ambitious target of 0.60 for "low-carbon" cementitious compositions to reach the carbon neutrality by 2050 and to comply with 2-degree Celsius (°C) Scenario 2DS (International Energy Agency IEA, "Technology Roadmap - Low-Carbon Transition in the Cement Industry", The Cement Sustainability Initiative, 2018).

The need to reduce the clinker-to-cement ratio to the desired values for the carbon neutrality have actively stimulated the research for new chemical admixtures to solve both the problems of early and final strength development of low clinker, low-carbon, cementitious compositions.

US 4318744 discloses an admixture composition for improving the strength of Portland cement concrete containing pozzolan, comprising a mixture containing at least one component selected from lignosulfonic acids, hydroxylated carboxylic acids, glucose polymers, alkanolamines, sodium chloride, sodium nitrite, calcium nitrite, formic acid.

US 5084103 discloses an improved hydraulic Portland cement composition comprising a Portland cement having at least 4 per cent C₄AF in combination with at least one higher trialkanolamine selected from triisopropanolamine, N,N-bis(2-hydroxyethyl)-N-(2-hydroxypropyl)amine, tris(2-hydroxybutyl)amine and their mixtures.

WO 2015/062798 claims an admixture composition for improving the properties of the cementitious composition wherein the admixture composition comprises at least a polycarboxylate type comb-polymer dispersant and a hydroxyl amine compound selected from N,N-bis (2 hydroxypropyl)-N-(hydroxyethyl) amine and optionally one or more polyhydroxyalkyl ethyleneamine compounds.

WO 2017/214108 describes a cement admixture for cementitious compositions based on glycol ether acetates, particularly including 2-butoxyethyl acetate and 2,2-(butoxyethoxy)ethyl acetate. By adding such admixture at the dosage of 1 per cent by weight of cement, the compressive strength of the resulting mortar is increased by 12 per cent after 7 days of curing, compared to the same mortar without the admixture.

In recent years, new generation admixtures have been proposed to promote the early strength development of Portland cement. Such new additives are based on water suspensions of nano-sized of calcium silicate hydrates and transition metal silicate hydrates and confirmed to be a very effective and risk-free technology to accelerate the hydration rate of clinker-based cements. Thanks to the reduced setting time and early development of mechanical strength, such new generation admixtures represent a promising way to extend the future use of concrete with lower amount of clinker and higher amount of SCMs. A comprehensive description of the mechanism of action of this new generation of accelerating admixtures is included in the book "Smart Nanoconcretes and Cement-based Materials", edited by M.S. Liev, P. Nguyen-Tri, T.A. Nguyen and S. Kakooei (Elsevier, 2020).

EP 2664596 B1 discloses a process for the preparation of such accelerating admixtures by reacting a water-soluble calcium compound with a water-soluble silicate compound in the presence of an aqueous solution containing a water-soluble comb polymer suitable as plasticizer for hydraulic binder. Such composition consists of a dispersion of nano-sized particles of calcium silicate hydrate in water stabilized by the water-soluble comb polymer. However, calcium silicate hydrate crystal nuclei as nano-sized particles tend to agglomerate due to their large specific surface area, and their efficiency as hardening accelerators tends to be significantly reduced with time as the size becomes larger and the long-term dispersion stability of the calcium silicate hydrate crystal nucleus suspension is difficult to be ensured.

CN 111253107 claims an alcohol amine modified hydrated calcium silicate early strength agent which solves the problem of long-term dispersion stability of a hydrated calcium silicate crystal nano-sized suspensions, preventing the agglomeration of nano-sized calcium silicate nuclei in larger agglomerates, the stabilizing agent being an alcohol amine selected from the group of triethanolamine, diethanolamine, dimethylethanolamine, triisopropanolamine, isopropanolamine, diisopropanolamine, diethanol monoisopropanolamine and monoethaneldiisopropanolamine

Furthermore, EP 3080052 B1 claims the use of transition metal silicate hydrate and mixed transition metal alkaline earth metals silicate hydrate, in the form of particles with diameter lower than 1000 nm, as accelerating admixture for hydraulic binders. Typical transition metals include chromium (Cr), manganese (Mn), iron (Fe), cobalt (Co), nickel (Ni), copper (Cu) and zinc (Zn).

Nevertheless, even if these new admixtures based on calcium silicate hydrates and transition metal silicate hydrates claimed in EP 2664596 B1, EP 3080052 B1 and CN 111253107 B solve the problem of the early strength development of low-carbon cementitious compositions rich in SCMs, they do not give substantial improvements in enhancing the final strength at longer age.

US 2019/0367422 describes a strength enhancing admixture for cementitious and/or pozzolanic compositions based on calcium silicate hydrate, obtained from the reaction of a water-soluble calcium compound with a water-soluble silicate compound in the presence of a water-soluble dispersant. This admixture is based on the formulation of at least the afore mentioned calcium silicate hydrate, at least an alkanolamine, at least an inorganic accelerating admixture and at least a carbohydrate. This admixture composition enhances the final strength of cementitious compositions without affecting the early strength development.

### DESCRIPTION OF THE INVENTION

The present invention concerns an admixture for producing low clinker, low-carbon cementitious compositions. More particularly, one of the objects of the present invention is a strength enhancing admixture capable of developing high final strength of cementitious composition with reduced amount of clinker and high dosages of supplementary cementitious materials, such as fly ash, ground granulated blast furnace slag, natural pozzolanas, limestone, calcined clays and other pozzolanic materials. Another object of the invention is a cementitious composition comprising at least one cementitious material, selected from hydraulic cements and mixtures of hydraulic cements with supplementary cementitious materials, and the strength enhancing admixture of the invention.

The strength enhancing admixture of the invention is capable of developing high final strength of such cementitious compositions without affecting the development of early strength and is characterized by high stability to storage and long storage resistance.

The strength enhancing admixture of the invention comprises a) transition metal silicate hydrates and at least one of b) at least one alkanolamine, c) at least one inorganic accelerator and d) at least one hydroxylated organic compound selected from carbohydrates, sugar-alcohols, polyols and their mixtures.

Suitable transition metal silicate hydrates are disclosed in EP 3080052 B1, characterized by the following general formula:

*a*MeₓO_{y}·*b*MO·*c*Al₂O₃·SiO₂·*d*H₂O 1)

where
- Me represents a transition metal whose molar coefficient *a* is in a range between 0.001 and 2, preferably between 0.01 and 1;
- M represents an alkaline earth metal whose molar coefficient b is in a range between 0 and 2, preferably between 0.3 and 1.6;
- the molar coefficient c for Al₂O₃ is in a range between 0 and 2, preferably between 0.1 and 1;
- H₂O represents the hydration water of the silicate hydrate whose molar coefficient d can vary within a wide range between 0.5 and 20;
- x and y can both be equal to 1 or different, depending on the valence of the transition metal, given that the valence of the oxygen atom in the metal oxide is equal to 2.

The transition metal silicate hydrates suitable for the invention are described in EP 3080052 B1 and can be synthesized by combining, under high shear mechanical treatment, a soluble silicon-containing compound, a soluble transition metal compound and possibly a soluble compound of an alkaline earth metal and/or aluminium, in alkaline conditions, to form an aqueous suspension of transition metal silicate hydrate of formula 1) with final particles of size lower than 1000 nm, such process being carried out in the presence of a water-soluble dispersant. Suitable water-soluble dispersants are polycarboxylate ether polymer, phosphonate derivatives of polyoxyalkylenes, polynaphthalene sulfonate, polymelamine sulfonate, polyethercarboxylate polymers possibly containing phosphonic and/or sulfonic groups.

In one preferred embodiment, the polyetherpolycarboxylate polymers are described in EP 1547986 B1, consisting in crosslinked or partially crosslinked polyetherpolycarboxylate polymers. Such polymers, useful as intrinsically low-foaming superplasticizers, comprise terpolymers of the following mixtures of monomers having the following formulas: 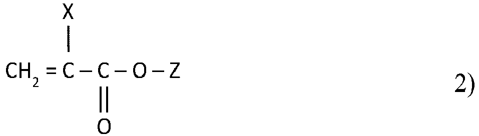 where Z = H, Na, Li, ½ Ca and X is H or CH₃; 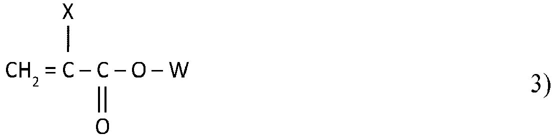 where W = -(-CH₂-CH₂-O-)ₙ-CH₃, n is integer from 51 and 300 and X is H or CH₃; 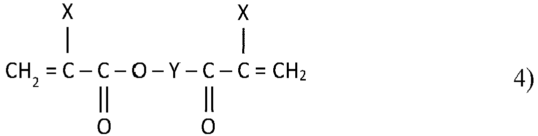 where 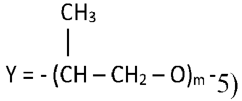 and m is integer from 2 to 50.

In another preferred embodiment, the polyetherpolycarboxylate polymers are described in EP 2516344 B1, obtained by reacting at temperature from 140°C to 180 °C and distilling water off, acid, not neutralized polycarboxylic polymers, independently selected from polyacrylic acid, polymethacrylic acid, copolymers between acrylic and methacrylic acid and their mixtures wherein the molecular weight of the polycarboxylic polymer is from 1,000 to 20,000 Dalton, with monofunctional polyethers selected from polyethyleneglycolmonomethylethers of molecular weight from 2,000 to 13,200 Dalton and difunctional polyethers, selected from polypropylene glycols of molecular weight from 280 to 11,800 Daltons, in the absence of strong acidic catalysts.

Suitable alkanolamines useful for the invention comprise triisopropanolamine (TIPA), triethanolamine (TEA), N,N,N',N'-tetra(hydroxyethyl)ethylenediamine (THEED), monoethanolamine (MEA), methyldiethanolamine (MDEA), diethanolamine (DEA) diisopropanolamine (DIPA) or their mixtures.

Suitable inorganic accelerators useful for the invention comprise at least one sulfate-based compound, aluminate-based compound, nitrate-based compound, nitrite-based compound, preferably thiocyanate-based compounds, selected from alkali metal thiocyanate, earth-alkali metal thiocyanate or ammonium thiocyanate.

The hydroxylated organic compounds useful for the invention include carbohydrates, sugar-alcohols, polyols and their mixtures. Suitable carbohydrates include monosaccharides and polysaccharides such as, for example, corn syrup, molasses, sucrose, inverted sugar, glucose, fructose, diutan gum, welan gum and their mixtures. Suitable sugar alcohols include xylitol, mannitol, maltitol, sorbitol, lactitol and their mixtures. Suitable polyols include, for example, glycerol, erythritol, pentaerythritol, dipentaerythritol, hexaglycerol, their ethoxylate derivatives and mixtures therefrom.

The essential ingredients of the strength enhancing admixture of the invention, consisting in the transition metal silicate hydrate and at least one alkanolamine, at least one inorganic accelerator, at least a hydroxylated organic compound, can be combined in various proportions. Typically, based on the total dry weight of the admixture, the strength enhancing admixture of the invention comprises from 0.5 to 60 weight percent of the transition metal silicate hydrate, from 1 to 70 weight percent of the alkanolamine, from 1 to 70 weight percent of the inorganic accelerator and from 0.5 to 60 per cent of the hydroxylated organic compound.

Typically, the strength enhancing admixture of the invention is in the form of an aqueous suspension, where the different ingredients may be combined in various proportions. The total solids content of the strength enhancing admixture of the invention may be in the range from 10 per cent solids to 70 per cent solids, depending on the proportions with which the different ingredients are formulated.

A further characteristic of the strength enhancing admixture based on transition metal silicate hydrates of the invention is the excellent stability of the final composition, both in terms of the particle size of the transition metal silicate hydrate nuclei and in terms of the stability of the suspensions over time. This aspect represents an important improvement compared to the formulation based on calcium silicate hydrates. In fact, it has been observed that the latter exhibit a limited stability, with the tendency of agglomeration of such suspensions over time, highlighted by the build-up of the viscosity and the sedimentation of the solid fraction. The particle size of such suspensions can be measured by light scattering, for example with an instrument such as Zetasizer Nano series model by Malvern Panalytical Inc.

The presence of the transition metal bound to the polysilicate chains which constitute the transition metal silicate hydrates of the invention seems to be essential for both the particle size and the viscosity stability over time. In fact, most of the transition metals can easily interact with alkanolamines, alkali thiocyanate and hydroxylated organic derivatives forming stable complexes, as reported by A. Karadag et al. (Polyhedron 20, 2001, pp. 635-641) and by V.T. Yilmaz et al. (Polyhedron 20, 2001, pp. 3209-3217). Such interactions may play an important role in the stabilization process of the strength enhancing admixture of the invention.

The admixture of the invention is typically added to the cementitious composition in an amount from 0.01 to 4 weight percent on the weight of the cementitious material. Examples of hydraulic cements include Portland cement, alumina cement, slag cement, limestone cement, pozzolanic cement, calcined clay cement, sulfoaluminate cement.

The cementitious composition may also include supplementary cementitious material such as fly ash, limestone, slag, calcined clay, silica fume, natural pozzolana or metakaolin.

The characteristics of the invention are described in further details in the following examples.

### EXAMPLE 1

This example describes the production of the transition metal silicate hydrate nano-sized aqueous suspension, prepared according to EP 3080052 B1. The product was synthesized by the double precipitation method by combining an aqueous solution of Cu(NO₃)₂ and Ca(NO₃)₂ with a molar ratio Cu/Ca = 0.1 (solution A) with an aqueous solution of Na₂SiO₃ (solution B), in the presence of a solution of polycarboxylate dispersant (solution C). The polycarboxylate dispersant was a MPEG-PCE terpolymer of methoxy-polyethyleneglycol-methacrylate of molecular weight of about 5,000 Da, methacrylic acid and polypropyleneglycol-di-methacrylate produced by free radical polymerization according to EP 1547986 B1. The final polymer had a molecular weight of 100,000 Da, as determined by Gel Filtration Chromatography, GFC.

1173 g of a MPEG-PCE aqueous solution (solids content of 7.5 weight per cent) (solution C) were placed in a 2 L round-bottom glass reactor equipped with mechanical stirrer and agitated at 300 rpm. Next, 398 g of solution A, containing 1 mole of Ca(NO₃)₂ and 0.1 mole of Cu(NO₃)₂ and 550 g of solution B, containing 1.1 mole of Na₂SiO₃ were simultaneously added to solution C and the whole reaction mass was recycled through a mixing cell equipped with a high shear mixer (Silverson L4R, operated at 8,000 rpm).

Solution A and B were added separately by peristaltic pumps at a constant pumping rate within 80 minutes directly in the high shear zone of the mixing cell. The temperature of the reaction was kept constant at 20°C. The final product was a blue aqueous suspension with a viscosity of 215 cP and a dry content of 23 weight per cent. The number average particle size of the suspension, determined by Zetasizer Nano series model by Malvern Panalytical Inc., was 89 nm.

### EXAMPLE 2

This example describes the production of the transition metal silicate hydrate nano-sized aqueous suspension, prepared according to EP 3080052 B1. The product was synthesized by the double precipitation method by combining an aqueous solution of Cu(NO₃)₂ and Ca(NO₃)₂ with a molar ratio Cu/Ca = 0.2 (solution A) with an aqueous solution of Na₂SiO₃ (solution B), in the presence of a solution of polycarboxylate dispersant (solution C). The polycarboxylate dispersant was a MPEG-PCE terpolymer of methoxy-polyethyleneglycol-methacrylate of molecular weight of about 5,000 Da, methacrylic acid and polypropyleneglycol-di-methacrylate produced by free radical polymerization according to EP 1547986 B1. The final polymer had a molecular weight of 85,000 Da, as determined by Gel Filtration Chromatography, GFC.

2800 g of a MPEG-PCE aqueous solution (solids content of 3.1 weight per cent) (solution C) were placed in a 4 L round-bottom glass reactor equipped with mechanical stirrer and agitated at 300 rpm. Next, 398 g of solution A, containing 1 mole of Ca(NO₃)₂ and 0.2 mole of Cu(NO₃)₂ and 550 g of solution B, containing 1.2 mole of NaiSiO₃ were simultaneously added to solution C and the whole reaction mass was recycled through a mixing cell equipped with a high shear mixer (Silverson L4R, operated at 8,000 rpm). Solution A and B were added separately by peristaltic pumps at a constant pumping rate within 80 minutes directly in the high shear zone of the mixing cell. The temperature of the reaction was kept constant at 20°C. The final product was a blue aqueous suspension with a viscosity of 185 cP and a dry content of 10 weight per cent. The number average particle size of the suspension, determined by Zetasizer Nano series model by Malvern Panalytical Inc., was 76 nm.

### EXAMPLE 3

Different formulations of the strength enhancing admixture of the present invention were produced by combining the essential ingredients in different proportions. The composition of the different formulations is shown in the following table, where the relative amount of each ingredient is indicated as per cent by weight (% wt) of the total dry material.

The following abbreviations are used:
**Ex. 1 -** Transition metal silicate hydrate (MeSH) synthesized according the Example 1 of the present invention;
**Ex. 2** - Transition metal silicate hydrate (MeSH) synthesized according the Example 2 of the present invention;
**DEA** - Diethanolamine;
**TIPA** - Triisopropanolamine;
**S** - Sucrose;
**NaSCN** - Sodium thiocyanate 55 % solution;
**NaNO₃** = Sodium nitrate;
**Al₂(SO₄)₃** = Aluminium sulphate;
**NaNO₂** = Sodium Nitrite
**GSy** - Glucose Syrup 80 % solution;
**P** - Pentaerythritol;
**P(EO)** - Ethoxylated Pentaerythritol;
**X** - Xylitol;
**G** - Glycerol
**Sor** - Sorbitol

**Table 1. Composition of the different formulations of the strength enhancing admixtures of the present invention.**

| **Formulation** | **MeSH** | | **Alkanolamine** | | **Inorganic accelerator** | | **Carbohydrate/Polyol/Sugar alcohol** | | **Total solids of the final formulation (%)** |
|---|---|---|---|---|---|---|---|---|---|
| | **Type** | **% wt** | **Type** | **%wt** | **Type** | **% wt** | **Type** | **% wt** | |
| # 1 | Ex. 1 | 18.7 | DEA | 32.5 | NaSCN | 44.7 | S | 4.1 | 48.8 |
| # 2 | Ex.1 | 47.8 | DEA | 44.0 | NaSCN | 2.8 | S | 5.5 | 36.1 |
| # 3 | Ex. 2 | 7.4 | DEA | 29.6 | NaSCN | 40.7 | GSy | 22.2 | 47.4 |
| # 4 | Ex. 1 | 15.3 | DEA | 15.6 | NaSCN | 36.3 | GSy | 19.8 | 30.0 |
| | | | TIPA | 13.2 | | | | | |
| # 5 | Ex. 1 | 15.3 | DEA | 15.6 | NaSCN | 36.3 | P | 19.8 | 30.2 |
| | | | TIPA | 13.2 | | | | | |
| # 6 | Ex. 1 | 10.0 | DEA | 4.0 | NaSCN | 41.4 | GSy | 22.1 | 33.7 |
| | | | TIPA | 22.6 | | | | | |
| # 7 | Ex. 1 | 15.1 | DEA | 15.5 | NaSCN | 36.1 | GSy | 6.0 | 32.1 |
| | | | TIPA | 13.1 | | | P | 14.2 | |
| # 8 | Ex.2 | 15.5 | DEA | 27.0 | NaSCN | 37.1 | GSy | 20.3 | 35.7 |
| # 9 | Ex. 1 | 16.4 | DEA | 28.5 | NaSCN | 39.2 | G | 15.8 | 52.1 |
| # 10 | Ex. 1 | 15.3 | DEA | 15.6 | NaSCN | 36.3 | X | 19.8 | 30.2 |
| | | | TIPA | 13.2 | | | | | |
| # 11 | Ex. 1 | 15.5 | DEA | 27.1 | NaSCN | 37.1 | GSy | 20.3 | 52.0 |
| # 12 | Ex. 1 | 15.1 | DEA | 15.4 | NaSCN | 36.0 | P | 14.2 | 30.2 |
| | | | TIPA | 13.1 | | | Sor | 6.2 | |
| # 13 | Ex. 1 | 15.3 | DEA | 15.6 | NaSCN | 36.3 | P(EO) | 19.8 | |
| | | | TIPA | 13.2 | | | | | |
| # 14 | Ex. 1 | 15.3 | DEA | 32.5 | NaSCN | 41.0 | GSy | 19.8 | 30.0 |
| | | | TIPA | 13.2 | NaNO₃ | 3.7 | | | |
| # 15 | Ex. 1 | 15.3 | DEA | 32.5 | NaSCN | 41 | GSy | 19.8 | 30.0 |
| | | | TIPA | 13.2 | Al₂(SO₄)₃ | 3.7 | | | |
| # 16 | Ex.1 | 15.3 | DEA | 32.5 | NASCN | 41 | GSy | 19.8 | 30.0 |
| | | | TIPA | 13.2 | NaNO₂ | 3.7 | | | |

All the formulations were stable on storage.

### EXAMPLE 4

The ability of the formulations of Example 3 to enhance compressive strength of cementitious compositions was evaluated in mortar tests by using different cementitious binders. All the mortars were prepared according to EN 197-1 norm by mixing normalized sand, the selected binder and predetermined water in a Hobart mixer, in the presence of different dosages of the formulations of the strength enhancing admixtures of the present invention (Table 1 of Example 3). Polycarboxylate PCE superplasticizer Dynamon SX produced by Mapei was always used to impart the desired flowability to the mortars.

The initial consistency of the fresh mortars was measured by the flow table test, after 15 drops. The fresh mortars were molded in three-sector 4 x 4 x 16 cm polystyrene formworks and cured at 20 °C and 98 % R.H. Compressive strength was measured after 1, 7 and 28 days of curing and compared with a reference mortar (REF) not containing the strength enhancing admixtures of Example 3. The dosage of both Dynamon SX PCE superplasticizer and the strength enhancing admixtures of Example 3 are always indicated as per cent of dry admixture by mass of cement (% dbmc).

Different binders containing SCMs were used, according the classification of European Standard EN 197-1:
CEM IVA 42.5N: pozzolanic cement, based on a mixture of clinker (68-89 %), pozzolanic material including silica-fume, natural pozzolana, fly ash (11-35 %) and gypsum (0-5 %);
CEM IVA-P 42.5N: pozzolanic cement, based on a mixture of clinker (68-89 %), natural pozzolana, (11-35 %) and gypsum (0-5 %);
CEM IVB 32.5N: pozzolanic cement, based on a mixture of clinker (45-64 %), pozzolanic material including silica-fume, natural pozzolana, fly ash (36-55 %) and gypsum (0-5 %);
CEM III/B 42.5R: slag cement, based on a mixture of clinker (20-34 %), ground granulated blast furnace slag (66-80 %) and gypsum (0-5 %);
CEM II/A-LL: 42.5R: limestone cement, based on a mixture of clinker (80-94 %), limestone (20-6 %) and gypsum (0-5 %);
CAC: calcium aluminate cement (Al₂O₃ content > 40% by weight, mainly in the form of CA);
CSA: calcium sulphoaluminate cement, based on a mixture of CSA clinker (25-35 %), CEM II/A-LL 42.5R (65-45 %) and gypsum (10-20 %);
Mixture of 75 per cent CEM I 52.5R (95-100 % clinker and 0-5 % gypsum) with 25 per cent Class F Fly-Ash, according to ASTM C 618;
LC3: calcined clay cement, based on a mixture of CEM I 52.5R (53%), calcined clay (metakaolin) (29%), limestone (14%) and gypsum (4%).

The results of the mortar tests with the different cements are reported in Table 2.

**Table 2. Strength enhancement provided by the different formulations of the strength enhancing admixtures of the present invention on mortar samples on various low-clinker, low-CO₂ cementitious binders.**

| **3** | **Binder** | **Sand** | **Water** | **W/C** | **Dynamon SX** | **Flow** | **Strength Enhancing Admixture Example 3** | | **Relative increase of compressive strength vs REF (%)** | | |
|---|---|---|---|---|---|---|---|---|---|---|---|
| | **g** | **g** | **g** | | **% dbmc** | **mm** | **Type** | **% dbmc** | **1d** | **7d** | **28d** |
| CEM IVA 42.5N | 450 | 1350 | 198 | 0.44 | 0.21 | 220 | # 2 | 0.64 | 21.4 | 6.8 | 6.3 |
| CEM IVA 42.5N | 450 | 1350 | 189 | 0.44 | 0.21 | 235 | # 1 | 0.35 | 26.5 | 3.8 | 5.2 |
| CEM IVA-P 42.5N | 450 | 1350 | 207 | 0.46 | 0.21 | 200 | # 1 | 0.52 | 9.8 | 13.8 | 2.7 |
| CEM IVB 32.5N | 450 | 1350 | 180 | 0.40 | 0.12 | 205 | # 11 | 0.22 | 12.7 | 10.7 | 15.5 |
| CEM IVB 32.5N | 450 | 1350 | 180 | 0.40 | 0.12 | 200 | # 9 | 0.22 | 12.5 | 13.2 | 7.7 |
| CEM IVB 32.5N | 450 | 1350 | 180 | 0.40 | 0.12 | 210 | # 4 | 0.22 | 19.2 | 23.1 | 10.1 |
| CEM IVB 32.5N | 450 | 1350 | 180 | 0.40 | 0.12 | 220 | # 6 | 0.33 | 23.7 | 32.2 | 12.5 |
| CEM IVB 32.5N | 450 | 1350 | 189 | 0.42 | 0.12 | 244 | # 5 | 0.22 | 23.2 | 22.6 | 8.9 |
| CEM IVB 32.5N | 450 | 1350 | 180 | 0.40 | 0.12 | 219 | # 7 | 0.22 | 17.8 | 21.1 | 9.4 |
| CEM IVB 32.5N | 450 | 1350 | 180 | 0.40 | 0.12 | 180 | # 8 | 0.22 | 15.6 | 22.4 | 7.9 |
| CEM IVB 32.5N | 450 | 1350 | 189 | 0.42 | 0.12 | 230 | # 13 | 0.22 | 35.8 | 20.6 | 12.2 |
| CEM IVB 32.5N | 450 | 1350 | 180 | 0.40 | 0.12 | 180 | # 14 | 0.22 | 19.7 | 11.8 | 5.9 |
| CEM IVB 32.5N | 450 | 1350 | 180 | 0.40 | 0.12 | 190 | # 15 | 0.22 | 25.7 | 8.6 | 4.1 |
| CEMI 52.5R:FA (3:1) | 450 | 1350 | 180 | 0.40 | 0.21 | 215 | # 9 | 0.22 | 10.7 | 5.2 | 4.1 |
| CEMI52.5R:F A (3:1) | 450 | 1350 | 189 | 0.42 | 0.21 | 205 | # 11 | 0.33 | 11.9 | 3.2 | 10.3 |
| CEM IIA-LL 42.5R | 450 | 1350 | 207 | 0.46 | 0.21 | 210 | # 4 | 0.22 | 10.2 | 8.1 | 4.2 |
| CEM IIIB 42.5R | 450 | 1350 | 180 | 0.40 | 0.12 | 227 | # 6 | 0.33 | 15.3 | 11.9 | 8.3 |
| CSA | 450 | 1350 | 180 | 0.4 | 0.12 | 198 | # 7 | 0.22 | 9.9 | 7.8 | 5.1 |
| CAC | 450 | 1350 | 180 | 0.4 | 0.12 | 200 | # 5 | 0.22 | 8.1 | 6.7 | 4.5 |
| LC3 | 450 | 1350 | 180 | 0.4 | 0.12 | 210 | #4 | 0.22 | 12.1 | 10.3 | 8.5 |

The results of the tests of this example clearly show that the admixture of the invention produce definite improvements of the compressive strength at all the dates. Particularly, the improvement has been calculated as the relative per cent increase of compressive strength compared with the reference mortar not containing the admixture of the invention at different times of curing. Surprisingly, beside showing definite improvement at early age, the mortars containing the admixture of the invention show relevant increase in compressive strength also at longer ages (7 day and 28 days of curing).

### EXAMPLE 5

In this example, concrete tests were performed with and without the strength enhancing admixture of the present invention to verify the strength improvement at different curing times. A mixture of 75 per cent Portland cement and 25 per cent Fly was used as cementitious binding material.

Concrete specimens were prepared by mixing Type I/II Portland cement according to ASTM C 150 (267 kg/m³), Class F Fly Ash according to ASTM C 618 (89 kg/m³), maximum diameter 20 mm coarse aggregates (1077 kg/m³) and sand (804 kg/m³).

Dynamon SX superplasticizer produced by Mapei was dosed at 0.47 per cent by mass of the total binder (sum of Portland cement and Fly ash) to control the slump flow of concretes in the range from 160 mm to 210 mm (consistency class S4 according to EN 206-1) and to cast concretes with water-to-binder ratio w/b = 0.45.

Admixture # 1 of the invention was selected for the concrete tests at the dosages of 0.62 and 0.94 per cent of admixture by mass of the total binder (sum of Portland cement and Fly ash).

The results of the concrete tests are shown in the following Table 3, which confirm the excellent behavior of the admixture of the invention to enhance the compressive strength of concrete at all curing times, from 1 day to 56 days.

**Table 3. Results of concrete tests using the strength enhancing admixture of the present invention.**

| **Mix N**. | **Cement** | **Fly ash** | **Total binder** | **Water** | **Dynamon SX** | **Strength Enhancing Admixture #1 Ex. 3 Table 1** | **W/B** | **Compressive strength (MPa)** | | | | | **Compressive strength improvement vs REF** | | | | |
|---|---|---|---|---|---|---|---|---|---|---|---|---|---|---|---|---|---|
| | Kg/m³ | Kg/m³ | Kg/m³ | Kg/m³ | % bmb | % bmb | | 1d | 3d | 7d | 28d | 56d | 1d | 3d | 7d | 28d | 56d |
| REF | 267 | 89 | 356 | 160 | 0.47 | - | 0.45 | 15.7 | 27.4 | 31.3 | 38.1 | 42.9 | - | - | - | - | - |
| 1 | 267 | 89 | 356 | 160 | 0.47 | 0.62 | 0.45 | 16.2 | 28.9 | 34.5 | 40.9 | 45.4 | 3.3 | 5.7 | 10.3 | 7.2 | 5.9 |
| 2 | 267 | 89 | 356 | 160 | 0.47 | 0.94 | 0.45 | 16.3 | 29.9 | 34.9 | 41.9 | 45.8 | 3.5 | 9.3 | 11.7 | 9.9 | 6.7 |

### EXAMPLE 6

In this example the stability on storage of the admixture of the present invention was evaluated in comparison with an equivalent formulation obtained by using a metal silicate hydrate suspension based on 100 per cent calcium silicate hydrate, as described in US 2019/0367422. For this purpose, a commercial product based on calcium silicate hydrate (Master X-Seed 100 from Basf) was used. This product is a 23 per cent solids suspension of synthetic calcium silicate hydrate produced according to EP 2664596 B1 by reacting a water-soluble calcium compound with a water-soluble silicate compound in the presence of an aqueous solution containing a water-soluble comb polymer suitable as plasticizer for hydraulic binder.

### Table 4. Composition of formulation # 11 of the present invention and an equivalent formulation based on 100 per cent calcium silicate hydrate (C-S-H).

| **Ingredient** | **Formulation # 11 - Table 1 of the present invention** | **Formulation with Calcium Silicate Hydrate C-S-H** |
|---|---|---|
| | % by weight on dry content | % by weight on dry content |
| Me-S-H produced according to Example 1 of the present invention | 15.5 | - |
| C-S-H produced according EP 2664596 B1 (Master X-Seed100) | - | 15.5 |
| DEA | 27.1 | 27.1 |
| NaSCN | 37.1 | 37.1 |
| GSy | 20.3 | 20.3 |

1 kg of both the above described formulations were put in glass pots and left standing in the laboratory at 20 °C for different times. Periodically, the aspect of the two formulations was checked and viscosity was measured.

The results of such observations are reported in Table 5.

### Table 5. Shelf-life behavior of formulation # 11 of the present invention in comparison with equivalent formulation based on C-S-H.

| **Time of storage (days)** | **Formulation # 11 - Table 1 of the present invention** | **Comparative formulation with Calcium Silicate Hydrate C-S-H (not inventive)** |
|---|---|---|
| | **Aspect** | **Aspect** |
| 1 | Stable suspension | Stable suspension |
| 3 | Stable suspension | Thick suspension |
| 7 | Stable suspension | Thick gel-like suspension |
| 14 | Stable suspension | Gel |
| 28 | Stable suspension | Gel |

As it can be recognized from the above Table 5, the formulation based on 100% calcium silicate hydrate (C-S-H) progressively exhibited an increase of the viscosity on storage and, after two weeks, was transformed into a gel. On the other hand, the Formulation # 11 of the invention remained stable and homogeneous, showing no increase of the viscosity over time. This result can be ascribed to the interactions of the transition metal of the Me-S-H (copper in this case) and the other ingredients of the formulation of the invention, which can easily form stable complexes. The absence of transition metal in the comparative formulation with C-S-H of Table 5 do not permit the formation of any complexes and the formulation resulted unstable on storage.

### EXAMPLE 7

In this example, isothermal calorimeter tests on cement pastes were performed with and without the strength enhancing admixture of the present invention during the first 42 hours. A higher cumulative heat development of the hydration reaction, as measured by calorimetric tests, is directly related to a higher degree of hydration of the anhydrous cement. In a typical experiment, 100 g of cementitious binder were mixed with 40 g of water and different dosages of the formulations of the strength enhancing admixtures of the present invention (Table 1 of Example 3). The heat development was monitored by means of a TAM Air isothermal calorimeter during the first 42 hours of hydration. The heat development of a cement paste prepared without any strength enhancing admixture was recorded for every cementitious binder and used as reference. The dosage of the strength enhancing admixtures of Example 3 is always indicated as per cent of dry admixture by mass of cement (% dbmc).

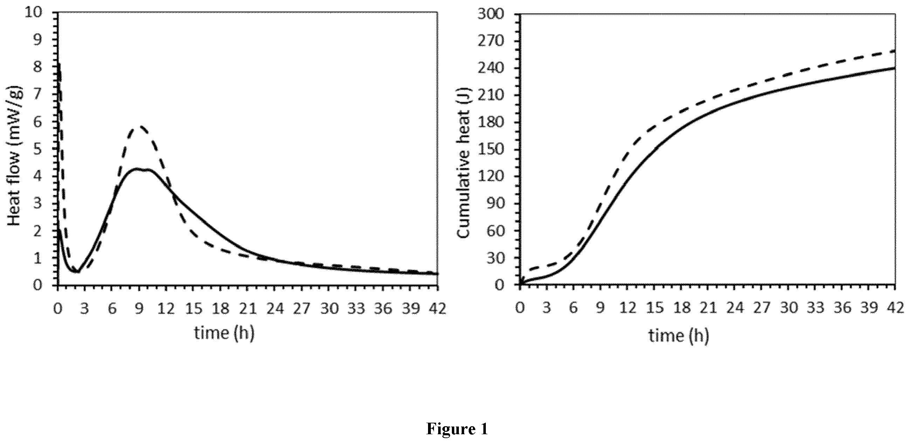

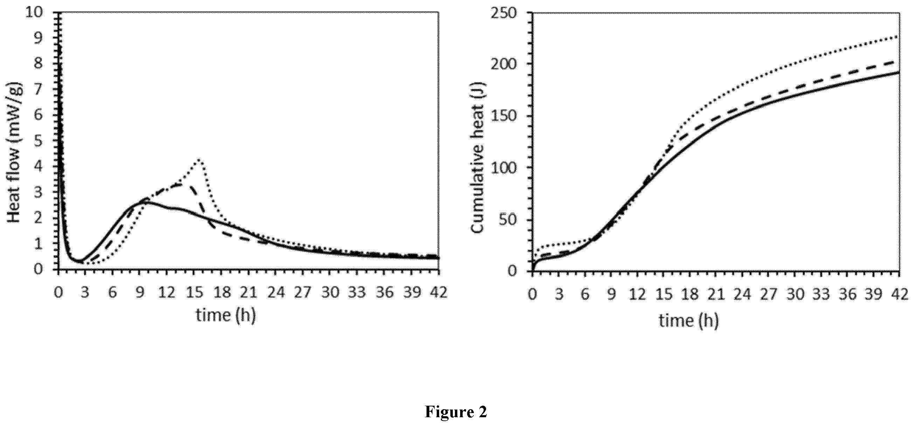

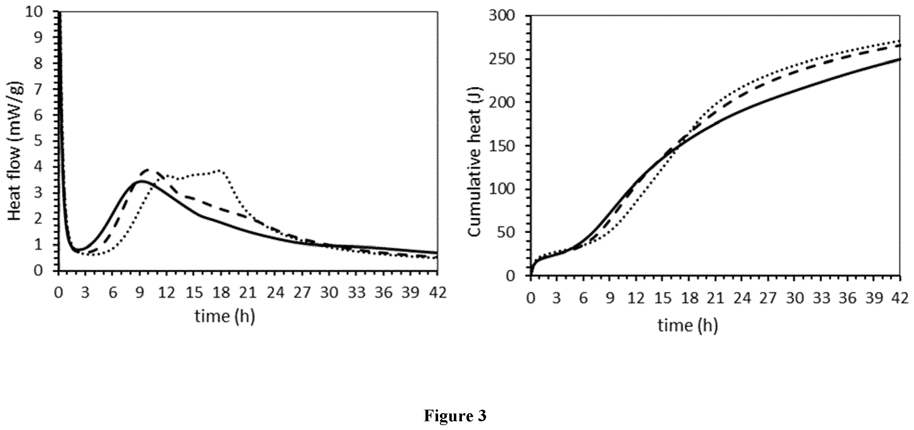

The results of the calorimetric tests with the different cements are reported in Figures 1-3.

Figure 1 shows the heat flow (left graph) and cumulative heat development (right graph) of CEM IV/A pastes. Reference (full line), Admixture #1 (0.33% dbwc, dashed line).

Figure 2 shows the heat flow (left graph) and cumulative heat development (right flow) of CEM IV/B pastes. Reference (full line), Admixture #1 (0.22% dbwc, dashed line, Admixture #4 (0.22% dbwc, dotted line).

Figure 3 shows the heat flow (left graph) and cumulative heat development (right flow) of a mixture of CEM I and FA pastes (CEMI:FA, 3:1 by weight). Reference (full line), Admixture #1 (0.33% dbwc, dashed line, Admixture #4 (0.22% dbwc, dotted line).

In all the proposed examples it is evident that the addition of the strength enhancing admixtures selected from Table 3 invariably enhances the total hydration of the cement pastes compared to a sample not containing the strength enhancing admixtures of the invention, as demonstrated by the higher cumulative heat released by cement paste containing the formulation of Table 3. For example, adding 0.33% dbwc of Admixture #1 to a CEM IV/A paste increase the cumulative heat generated by the hydration reaction by 11% compared to a blank reference; adding 0.22% dbwc of Admixture #4 to a CEM IV/B increase the cumulative heat generated by the hydration reaction by 9.8% compared to a blank reference. The increase in the cumulative heat of hydration reflects in higher compressive strength of the corresponding cementitious compositions at longer ages.

## Claims

1. A strength enhancing admixture for low-carbon cementitious compositions comprising: i) a transition metal silicate hydrate, ii) at least one alkanolamine, iii) at least one inorganic accelerator and iv) at least one hydroxylated organic compound, wherein the metal transition silicate hydrate has the general formula
*a*MeₓO_{y}·*b*MO·*c*Al₂O₃·SiO₂·*d*H₂O 1)
where
- Me represents a transition metal whose molar coefficient *a* is in a range between 0.001 and 2, preferably between 0.01 and 1;
- M represents an alkaline earth metal whose molar coefficient b is in a range between 0 and 2, preferably between 0.3 and 1.6;
- the molar coefficient c for Al₂O₃ is in a range between 0 and 2, preferably between 0.1 and 1;
- H₂O represents the hydration water of the silicate hydrate whose molar coefficient d can vary within a wide range between 0.5 and 20;
- x and y can both be equal to 1 or different, depending on the valence of the transition metal, given that the valence of the oxygen atom in the metal oxide is equal to 2.

2. The strength enhancing admixture according to claim 1, in which the transition metal is selected from chromium (Cr), manganese (Mn), iron (Fe), cobalt (Co), nickel (Ni), copper (Cu) and zinc (Zn).

3. The strength enhancing admixture according to claim 1 or 2, in which the transition metal silicate hydrate is a mixed silicate hydrate with alkaline earth metals, selected from calcium and magnesium.

4. The strength enhancing admixture according to any one or more of claims 1 to 3 wherein the transition metal silicate hydrate is produced by reaction, in alkaline conditions, of a water soluble silicon-containing compound with a water-soluble transition metal compound and possibly a water-soluble compound of an alkaline earth metal and/or aluminum, the reaction being effected in the presence of an aqueous solution of a water-soluble dispersant.

5. The strength enhancing admixture according to any one or more of claims 1 to 4 wherein the water-soluble dispersant comprises at least polycarboxylate ether polymer, phosphonate derivatives of polyoxyalkylenes, polynaphthalene sulfonate, polymelamine sulfonate.

6. The strength enhancing admixture according to any one or more of claims 1 to 5 wherein the metal silicate hydrate is in the form of an aqueous suspension of particles with diameter lower than 1,000 nm.

7. The strength enhancing admixture according to any one or more of claims 1 to 6 wherein the alkanolamine comprises at least triisopropanolamine, triethanolamine, N,N,N',N'-tetra(hydroxyethyl) ethylenediamine, monoethanolamine, methyldiethanolamine, diethanolamine or diisopropanolamine and their mixtures;

8. The strength enhancing admixture according to any one or more of claims 1 to 7 wherein the inorganic accelerator comprises at least one thiocyanate-based compound, sulfate-based compound, aluminate-based compound, nitrate-based compound, nitrite-based compound and their mixtures.

9. The strength enhancing admixture according to any one or more of claims 1 to 8 wherein the hydroxylated organic compound comprises at least one carbohydrate, sugar-alcohol, polyol and their mixtures.

10. The strength enhancing admixture according to any one or more of claims 1 to 9 wherein the carbohydrate comprises corn syrup, diutan gum, welan gum, molasses, sucrose, glucose, fructose.

11. The strength enhancing admixture according to any one or more of claims 1 to 10 wherein the sugar-alcohol compound comprises sorbitol, mannitol, maltitol, lactitol and their mixtures.

12. The strength enhancing admixture according to any one or more of claims 1 to 11 wherein the polyol compound comprises glycerol, erythritol, pentaerythritol, dipentaerythritol, hexaglycerol, their ethoxylate derivatives and their mixtures.

13. The strength enhancing admixture according to any one or more of claims 1 to 12 wherein, based on the total dry weight of the admixture, i) the transition metal silicate hydrate is in an amount of from 0.5 to 60 weight percent, ii) the alkanolamine is in an amount of from 1 to 70 weight percent, iii) the inorganic accelerator is in an amount of from 1 to 70 weight percent and iv) the hydroxylated organic compound is in an amount of from 0.5 to 60 weight percent.

14. A cementitious composition comprising at least one cementitious material, selected from hydraulic cements and mixtures of hydraulic cements with supplementary cementitious materials, and the strength enhancing admixture of claims from 1 to 13.

15. The cementitious composition according to claim 14, wherein the admixture according any or more of the claims from 1 to 13 is added in an amount from 0.01 to 4 weight percent on the weight of the cementitious material.

16. The cementitious composition according to claim 14 or 15, wherein the hydraulic cement comprises at least Portland cement, alumina cement, slag cement, limestone cement, pozzolanic cement, calcined clay cement, sulfoaluminate cement.

17. The cementitious composition according to any one of claims 14 to 16, wherein the supplementary cementitious material comprises at least one fly ash, limestone, slag, calcined clay, silica fume, natural pozzolana or metakaolin.
